Europäisches Patentamt

European Patent Office

Office européen des brevets

(19)

(11) Numéro de publication: **0 011 659**
**A1**

## (12) DEMANDE DE BREVET EUROPEEN

(21) Numéro de dépôt: **78200327.1**

(22) Date de dépôt: **01.12.78**

(51) Int. Cl.³: **A 47 J 17/20**
**A 23 N 7/02**

(43) Date de publication de la demande:
**11.06.80 Bulletin 80/12**

(84) Etats Contractants Désignés:
**BE CH DE FR GB LU NL SE**

(71) Demandeur: **Société Anonyme Compagnie Générale Belge des Isolants (COGEBI)**
**54, Chaussée de Charleroi**
**B-1060 Bruxelles (St. Gilles)(BE)**

(72) Inventeur: **Bendeville, Gustave**
**Rue de Châtelet, 30**
**B-6290 Nalinnes(BE)**

(74) Mandataire: **Mahieu, Raymond (BE) et al,**
**Ateliers de Constructions Electriques de Charleroi (ACEC), Service des Brevets B.P. 4**
**B-6000 Charleroi(BE)**

(54) **Procédé et machine à peler des légumes.**

(57) Un procédé pour peler des légumes, dans lequel on soumet la surface d'un légume à peler à une flagellation répétée au moyen de poils (18) souples animés de mouvements à grande vitesse, ainsi qu'une machine pour effectuer ce procéder.

Fig.2

Croydon Printing Company Ltd.

PROCEDE ET MACHINE A PELER DES LEGUMES.

Il est déjà connu de peler des légumes tels que pommes de terre, carottes, salsifis, pommes etc au moyen d'organes abrasifs par rapport auxquels le légume à peler est transporté, et/ou pivoté. Les organes abrasifs de ces machines connues sont, par exemple des surfaces garnies de pointes, de couteaux rigides ou souples, de pierres abrasives etc. Ces organes abrasifs connus permettent de peler des légumes ayant des surfaces géométriques convexes telles que des surfaces éllipsoïdiques ou coniques, mais si le légume présente des surfaces concaves comme cela arrive pour des pommes de terre, les systèmes connus mentionnés ne donnent pas satisfaction, car ils réduisent alors la pomme de terre en un corps convexe, inscrit dans la forme originale.

L'invention a pour but un procédé et une machine qui évite l'inconvénient décrit et qui permet de peler correctement, par exemple une pomme de terre, même aux endroits où elle présente des portions de surface concave.

Le procédé suivant l'invention est caractérisé en ce qu'on soumet la surface d'un légume à peler à une flagellation répétée au moyen de poils souples animés de mouvements à grande vitesse.

L'invention concerne aussi une machine à peler des légumes comprenant un dispositif pour transporter et/ou pivoter les légumes, caractérisée en ce qu'elle comprend au moins un corps garni de fouets en poils souples animé d'un mouvement de rotation à grande vitesse.

Le pelage des légumes est donc effectué grâce à une flagellation de la pelure au moyen de fouets très fins et souples entraînés en un mouvement très rapide. La vitesse du mouvement est ajusté à la résistance de la pelure et est choisie d'une valeur telle qu'elle permet le

42.05/1759

0011659

d échiquetage de la pelure en quelques coups de fouet. Le matériau des fouets est de préférence un fil qui ne s'effiloche pas et qui possède environ la souplesse d'une fibre textile, par exemple un fil de nylon d'un diamètre compris entre 0,2 et 1.5mm.

Lorsque de tels fouets sont montés sur un corps rotatif et présentent des longueurs d'environ 10 cm, la vitesse de rotation d'un tel corps rotatif peut être choisi dans la gamme de 1000 à 10000 tours par minute pour assurer le pelage de pommes de terre.

La densité de fouets sur le corps rotatif qui leur sert de base d'ancrage est choisie suffisamment faible pour que des particules de pelure ne risquent pas d'être emprisonnées dans des fouets qui suite à leur souplesse et leur longueur pourraient s'enchevêtrer.

L'invention est décrite ci-dessous par rapport à deux exemples de machine à peler des légumes représentés au dessin annexé. Dans ce dessin les figures 1 et 2 sont des vues en coupes schématiques de deux machines différentes, tandis que la figure 3 représente un détail de construction d'un corps rotatif garni de fouets.

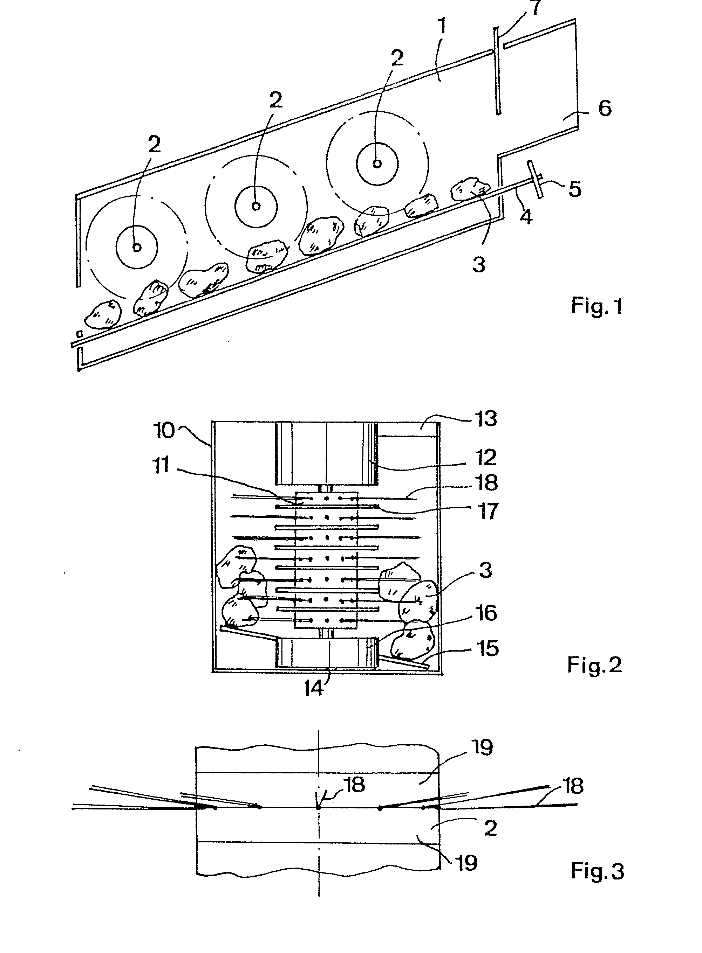

A la figure 1 est représentée une machine pour peler des pommes de terre constituée d'un couloir 1 incliné dans lequel sont montés plusieurs corps rotatifs 2 garnis de fouets au dessus d'un chemin de descente pour des pommes de terre 3. Ce chemin est composé de barres de grilles 4 tournantes, entraînées par l'intermédiaire de roues à chaîne 5 à partir d'un dispositif moteur, non représenté. Au dessus d'un couloir 1 est prévu une trémie de chargement 6 à débit réglable au moyen d'un registre 7. Les corps rotatifs 2 sont entraînés à grande vitesse, par exemple de 4000 à 6000 t/minute. Dans leur mouvement de descente sur les barres 4, les pommes de terre sont flagellées par les fouets fixés sur les corps rotatifs 2 et tournent grâce à la rotation des barres de grille 4 de manière à présenter successivement toute leur surface aux fouets ancrés dans les corps rotatifs 2.

La figure 2 montre une autre machine à peler des pommes de terre. Dans un récipient 10 tourne un corps rotatif 11 garni de fouets. Le corps 11 est entraîné par un moteur, non visible, caché par un écran 12, solidarisé au moyen de trois nervures 13, dont une seule est visible, avec le récipient 10. A la partie inférieure du récipient 10 se trouve un palier 14 pour le corps 11. Un fond plat ou incliné 15 du récipient 10 est entraîné par un dispositif réducteur 16 à une vitesse beaucoup plus lente que la vitesse de rotation du corps 11.

Pour éviter que les pommes de terre n'écrasent les poils constituant les fouets contre le corps 11, ce dernier est garni d'anneaux ou disques d'écartement 17, par exemple en caoutchouc, de part et d'autre des lignes le long desquels sont ancrés les fouets dans le corps rotatif 11.

La figure 3 représente une vue d'une parcelle d'un corps rotatif 2. Des poils ou fouets souples 18 sont ancrés par pinçage entre deux disques jointifs 19 du corps 2. La distance entre deux points d'ancrage voisins de poils est suffisamment grande pour éviter que les fouets ne s'entremêlent lors de la flagellation des surfaces des légumes. Cette distance est évidemment fonction de la longueur et de la souplesse des fouets. Des poils en fil de nylon d'environ 0,4 à 1 mm de diamètre ont été utilisés avec succès. La longueur des poils ou fouets 18 dépend du travail qu'ils sont appelés à fournir. Cette longueur est choisie au minimum égale à la moitié du diamètre des légumes à peler. Dans tous les cas la longueur des fouets est suffisamment courte pour éviter que la paroi interne du récipient ou du couloir de la machine ne soit fouettée.

L'ancrage des fouets dans le corps rotatif 2 peut se faire suivant d'autres modes que le pinçage entre deux disques par exemple de la même manière que l'ancrage de poils de brosse.

0011659

## REVENDICATIONS

1. Procédé à peler des légumes, caractérisé en ce qu'on soumet la surface d'un légume à peler à une flagellation répétée au moyen de poils (18) souples animés de mouvements à grande vitesse.

2. Machine à peler des légumes comprenant un dispositif pour transporter et ou pivoter des légumes pour effectuer le procédé suivant la revendication 1, caractérisée en ce qu'elle comprend au moins un corps (2,11) garni de fouets en poils (18) souples animé d'un mouvement de rotation à grande vitesse.

3. Machine suivant la revendication 2, caractérisée en ce que les poils (18) ont la souplesse d'une fibre textile.

4. Machine suivant la revendication 3, caractérisée en ce que les poils (18) sont en nylon d'une épaisseur en dessous d'un millimètre et demi

5. Machine suivant une des revendications 2 à 4, caractérisée en ce que la longueur des poils (18) est plus grande que la moitié du diamètre d'un légume peler.

6. Machine suivant une des revendications 2 à 5, caractérisée en ce que le corps (2,11) est un corps rotatif tournant entre 1000 et 10000 tours par minute.

7. Machine suivant une des revendications 2 à 6, caractérisée en ce qu'elle consiste en un couloir de descente équipée de corps rotatifs garnis de fouets (2) et d'une grille à barreaux rotatifs (4) pour faire tourner les légumes.

8. Machine suivant la revendication 7, caractérisée en ce qu'elle est équipée de plusieurs corps (2) garnis de fouets (18)

9. Machine suivant une des revendications 2 à 6, caractérisée en ce qu' elle consiste en un récipient équipé d'un corps rotatif garni de fouets (11) et d'un fond tournant pour faire tourner et pivoter les légumes.

10. Machine suivant la revendication 9, caractérisée en ce que le corps rotatif est garni d'anneaux ou disques d'écartement (17) pour éviter que les points d'ancrage des fouets (18) ne viennent en contact avec les légumes à peler.

0011659

1/1

Fig. 1

Fig. 2

Fig. 3

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int. Cl.²) |
|---|---|---|---|
| | DE - B - 1 219 276 (F.M.C. CORPORATION)<br><br>* colonnes 4 et 5; figures 3,4,5 *<br><br>--- | 1,2,3, 4,5,6 | A 47 J 17/20<br>A 23 N 7/02 |
| | US - A - 2 407 819 (DOLAN)<br><br>* colonne 2, figures 1 et 2 *<br><br>--- | 1,2,3, 5,9 | |
| | US - A - 3 158 187 (SMITH et al.)<br><br>* colonne 6, lignes 60 à 65; colonne 7, lignes 67 à 75; colonne 8, lignes 1 à 14; figures 6, 7,8 *<br><br>--- | 1,2,3, 4,5,7, 8 | |
| | FR - A - 415 137 (CHATELIN)<br><br>* page 2, colonne de droite; figure 4 *<br><br>--- | 1,2,3, 5,7 | **DOMAINES TECHNIQUES RECHERCHES (Int. Cl.²)**<br><br>A 47 J<br>A 23 N |
| | US - A - 2 146 267 (PEREZ)<br><br>* en totalité *<br><br>--- | 1,2,3, 7,8 | |
| | FR - A - 2 298 966 (GOUDSCHE MACHINEN FABRIEK B.V.)<br><br>* pages 4 et 5; figures 1 à 3 *<br><br>--- | 1,2,3, 8 | |
| | DE - A - 1 957 195 (REIMER)<br><br>* page 4, lignes 1 à 12; figure 1 * | 9 | |
| | US - A - 2 038 018 (WORTELBOER)<br><br>* en totalité *<br><br>------- | 1,2,3, 5 | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X | Le présent rapport de recherche a été établi pour toutes les revendications

| Lieu de la recherche | Date d'achèvement de la recherche | Examinateur |
|---|---|---|
| La Haye | 03-08-1979 | SCHARTZ |

OEB Form 1503.1  06.78